**Europäisches Patentamt**

(19) **European Patent Office**

**Office européen des brevets**

(11) Veröffentlichungsnummer: **0 158 951**
**B1**

(12) **EUROPÄISCHE PATENTSCHRIFT**

(45) Veröffentlichungstag der Patentschrift:
05.07.89

(21) Anmeldenummer: **85104209.3**

(22) Anmeldetag: **06.04.85**

(51) Int. Cl.⁴: **B 29 C 47/00,** B 29 C 47/20,
E 04 C 2/34 // B29L31:60,
B29L31:10

(54) Extrudierte Stegmehrfachplatte mit gewellten Stegen sowie Verfahren und Vorrichtung zu ihrer Herstellung.

(30) Priorität: **19.04.84 DE 3414832**
**14.07.84 DE 3426060**

(43) Veröffentlichungstag der Anmeldung:
**23.10.85 Patentblatt 85/43**

(45) Bekanntmachung des Hinweises auf die Patenterteilung:
**05.07.89 Patentblatt 89/27**

(84) Benannte Vertragsstaaten:
**AT CH DE FR GB IT LI NL**

(56) Entgegenhaltungen:
**DE-A- 2 009 933**
**DE-A- 2 527 787**
**DE-B- 1 195 476**
**FR-A- 2 237 754**
**GB-A- 967 411**
**GB-A- 1 130 598**
**US-A- 3 673 032**
**US-A- 3 692 889**
**US-A- 4 211 525**

(73) Patentinhaber: **Röhm GmbH, Kirschenallee**
**Postfach 4242, D-6100 Darmstadt 1 (DE)**

(72) Erfinder: **Vetter, Heinz, Dr.-Ing., Taunusstrasse 92,**
**D-6101 Rossdorf 1 (DE)**
Erfinder: **Schanz, Karl-Heinrich, Fürthweg 9,**
**D-6109 Mühltal (DE)**

ACTORUM AG

**Beschreibung**

Gebiet der Erfindung

Die Erfindung betrifft eine extrudierte Stegmehrfachplatte aus thermoplastischem Kunststoff
mit in Extrusionsrichtung gewellten Stegen sowie
ein Verfahren und eine Vorrichtung zu ihrer Herstellung. Stegmehrfachplatten, bestehend aus
zwei parallelen ebenen Außenwänden, gegebenenfalls parallel dazu liegenden Innenwänden
und zwischen den Außenwänden einstückig angeordneten Stegen haben als leichtes, wärmeisolierendes, steifes Verglasungs- oder Bedachungsmaterial erhebliche technische Bedeutung erlangt. Infolge der versteifenden Wirkung der Stege
können die Stegmehrfachplatten über große Stützweiten in Stegrichtung frei verlegt werden, jedoch
läßt die Steifigkeit quer zur Stegrichtung zu wünschen übrig. Eine höhere Quersteifigkeit haben
zwar Stegmehrfachplatten mit in Extrusionsrichtung gewellten Stegen. Wegen des großen apparativen Aufwandes zu ihrer Herstellung haben sie
jedoch bisher keine technische Bedeutung erlangt.

Stand der Technik

Aus der gattungsbildenden schweizerischen
Patentschrift 457 829 ist ein Verfahren zur Erzeugung von Hohlprofilplatten mit gewellten Zwischenstegen unter Verwendung einer speziellen
Extrusionsdüse bekannt. Die wellenförmige
Anordnung wird durch rhythmische seitliche Verschiebung der Kerne, zwischen denen die Stege
gebildet werden, innerhalb des Düsenmundes erreicht. Während die Zwischenstege innerhalb des
Plattenbereichs dadurch wellenförmig extrudiert
werden, wird der randständige Steg als Vollprofil
von wechselnder Breite ausgeführt, was einen
erheblichen Materialverbrauch und Spannungen
im Material verursacht. Die rhythmische Verschiebung des mit den Kernstücken versehenen Düsenkerns ist technisch aufwendig.

Ein anderes Prinzip zur Wellung der Stege geht
aus der DE-OS 2 734 464 hervor. Auch hier wird
eine speziell konstruierte Extrusionsdüse benötigt. Durch eine rhythmische Veränderung des
Strömungswiderstandes der Formmasse im Düsenmund werden bei der Extrusion des Hohlstranges die zwischen den Ansatzstellen der Stege
gelegenen Felder der Außenwände der Stegmehrfachplatte in der Weise abwechselnd dicker und
dünner ausgebildet, daß in benachbarten Feldern
jeweils eine dicke und eine dünne Zone nebeneinander liegen. Anschließend wird der Strang im
thermoelastischen Zustand zwei- oder dreiachsig
gereckt, wobei die dicken Zonen schwächer als
die dünnen Zonen gereckt werden. Dadurch rükken die Stege während des Reckens auf unterschiedliche Abstände auseinander, was zu einer
Wellung im Rhythmus der aufeinanderfolgenden
dicken und dünnen Zonen führt. Nebeneinanderliegende Stege sind in diesem Falle stets gegensinnig gewellt.

Aufgabe und Lösung

Ziel der Erfindung war es, die Herstellung von
Stegmehrfachplatten aus thermoplastischem
Kunststoff mit gewellten Stegen zu vereinfachen,
insbesondere das Herstellungsverfahren mit gebräuchlichen Extrusionsdüsen ohne mechanisch
bewegte Teile in der Extrusionsdüse durchzuführen. Weiterhin sollen die Nachteile der nach bekannten Verfahren hergestellten Stegmehrfachplatten vermieden werden.

Die Erfindung geht aus von einem Verfahren zur
Herstellung von extrudierten Stegmehrfachplatten
durch Extrusion eines thermoplastischen Kunststoffes durch eine Schlitzdüse, die zur Ausbildung
der Stege Kernstücke im Düsenschlitz enthält, zu
einem Hohlstrang und durch anschließende Kalibrierung und Abkühlung des extrudierten Hohlstranges in einem Formkanal und Abziehen des
erkalteten Hohlstranges nach dem Austritt aus
dem Formkanal. Erfindungsgemäß läßt man zur
Ausbildung von in Extrusionsrichtung gewellten
Stegen auf wenigstens eine Oberfläche des extrudierten Hohlstranges in dem Formkanal in einem
bereich, in welchem sich der Hohlstrang noch
oberhalb seiner Erweichungstemperatur befindet,
rhythmisch die Richtung wechselnde Reibungskräfte quer zur Extrusionsrichtung einwirken.

Zu diesem Zweck wird entweder ein spezieller
Formkanal eingesetzt, bei dem ein Abschnitt von
wenigstens einer der Formkanalwände im Eingangsbereich des Formkanals quer zur Extrusionsrichtung rhythmisch in wechselnder Richtung
bewegbar angeordnet ist und der nachfolgende
Abschnitt der Formkanalwand feststehend angeordnet ist oder man verwendet einen herkömmlichen Formkanal, der als ganzer in der gleichen
Weise bewegbar angeordnet ist.

In beiden Fällen werden durch die Querbewegung des Formkanals oder der bewegten Abschnitte der Formkanalwandungen Reibungskräfte quer zur Extrusionsrichtung auf den extrudierten Hohlstrang ausgeübt. Dadurch werden die an
den bewegten Formkanalwänden anliegenden
Außenwände des Hohlstranges mitbewegt, wodurch die mit den Außenwänden verbundenen
Stege einen schräg zur Extrusionsrichtung liegenden Verlauf erhalten. Beim Wechsel der Bewegungsrichtung ändert sich auch die Richtung des
schrägen Verlaufs. Auf diese Weise wird durch
den rhythmischen Wechsel der Bewegungsrichtung ein wellenförmiger Verlauf der Stege erzielt.

Für das Verfahren der Erfindung können übliche
Schlitzdüsen für die Herstellung von Stegmehrfachplatten ohne mechanisch bewegte Einbauten
eingesetzt werden. Da der technische Aufbau eines Formkanals wesentlich einfacher als der einer Extrusionsdüse ist, ist der Einbau bewegbarer
Abschnitte der Formkanalwandungen mit einem
geringeren technischen Aufwand verbunden als
der Einbau beweglicher Teile in eine Extrusionsdüse. Auch die quer verschiebbare Anordnung
des ganzen Formkanals ist eine konstruktiv einfache Lösung.

Gegenüber den Stegmehrfachplatten, die gemäß dem Stand der Technik mittels einer Schlitzdüse mit oszillierenden Kernstücken erzeugt worden sind, haben die erfindungsgemäßen Stegmehrfachplatten den Vorteil, daß die Randstege eine gleichmäßige Breite haben, wodurch der Materialverbrauch vermindert und Spannungen infolge stark unterschiedlicher Stegbreiten vermieden werden.

Der wellenförmige Verlauf der Stege hat zur Folge, daß die Außenwandabschnitte im Bereich zwischen den Seitenkanten und dem Ansatz des nächstfolgenden Steges im Rhythmus der Stegwellung eine schwankende Dicke aufweisen. Diese Schwankungen kommen dadurch zustande, daß der Außenwandbereich an den Stellen, wo der erste innerhalb des Hohlprofils liegende Steg am weitesten von der Seitenkante der Stegmehrfachplatte entfernt ist, gedehnt ist und umgekehrt an den Stellen, wo der Steg am nächsten an die Seitenkante herangerückt ist, gestaucht ist. Ähnliche Dickenschwankungen in der randständigen Kammer treten aus anderen Gründen auch in den Stegmehrfachplatten, die gemäß der DE-OS 2 734 464 hergestellt sind, auf. Im Unterschied zu diesen sind die Stege in den erfindungsgemäßen Stegmehrfachplatten stets gleichsinnig gewellt, was zu einer erhöhten Quersteifigkeit führt, und die Außenwandbereiche zwischen den Steganätzen sind ungereckt und von gleichförmiger Dicke.

Im Vergleich zu herkömmlichen Stegmehrfachplatten mit geradlinig verlaufenden Stegen ist die Quersteifigkeit der erfindungsgemäßen Platten deutlich erhöht. Dieser Effekt nimmt mit der Amplitude der Wellung zu.

Ausführung der Erfindung

Es ist von wesentlicher Bedeutung für das Verfahren der Erfindung, daß sich der Hohlstrang in dem Bereich des Formkanals, wo die Reibungskräfte quer zur Extrusionsrichtung einwirken, noch oberhalb seiner Erweichungstemperatur befindet, so daß er thermoplastisch verformbar ist. Die Verformung des Kunststoffmaterials im plastischen Bereich führt nur zu geringen Orientierungen und Rückstellkräften, so daß die einmal herbeigeführte Änderung der Gestalt ohne Anwendung äußerer Kräfte weitgehend beibehalten wird.

Das verfahren der Erfindung ist mit allen thermoplastischen Kunststoffen durchführbar, die sich in Schlitzdüsen üblicher Bauart im thermoplastischen Zustand zu einem Hohlstrang der beschriebenen Form extrudieren und in einem Formkanal kalibrieren und abkühlen lassen. Zu diesen Kunststoffen gehören Strangpreßmassen aus Polymethylmethacrylat, Polycarbonat, Polyvinylchlorid, Polypropylen, Polystyrol u.a.

Im nachfolgenden wird die Erfindung anhand der Figuren 1–8 erläutert.

Fig. 1 zeigt einen Querschnitt durch eine erfindungsgemäße Extrusionsanlage mit beweglichen Formkanalabschnitten.

Fig. 2 zeigt einen Längsschnitt durch eine Stegmehrfachplatte gemäß der Erfindung.

Fig. 3 zeigt einen Querschnitt durch die in Fig. 2 dargestellte Platte längs der Linie II–II in Fig. 2.

Fig. 4 zeigt in Draufsicht eine weitere erfindungsgemäße Platte mit verdrillten Stegen, wobei der Ansatz der Stege an der oberen Außenwand mit einer durchgezogenen Linie und der Ansatz an der unteren Außenwand mit einer punktierten Linie dargestellt ist.

Fig. 5 und 6 zeigen Querschnitte durch die Platte gemäß Fig. 4 längs den Linien IV–IV und III–III, wobei die Projektion der verdrillten Stege auf die Schnittebene mit punktierten Linien angedeutet ist.

Fig. 7 zeigt einen Querschnitt durch eine weitere Ausführungsform einer erfindungsgemäßen Stegmehrfachplatte in der gleichen Darstellungsweise wie Fig. 5.

Fig. 8 zeigt einen Querschnitt durch die Randzonen der in Fig. 2 und 3 dargestellten Platte.

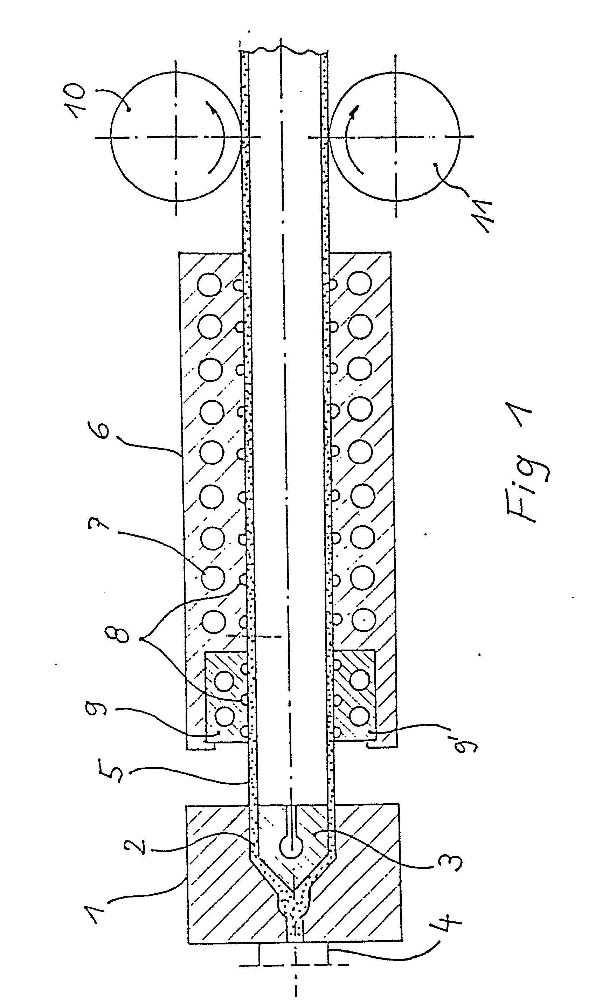

In Fig. 1 stellt 1 die Schlitzdüse dar, in deren Düsenschlitz 2 zur Ausbildung der Hohlkammern und der sie voneinander trennenden Stege eine Reihe von Kernstücken 3 eingebaut ist. Je nach der gewünschten Kammerform können die Kernstücke einen rechteckigen, dreieckigen oder trapezförmigen Querschnitt haben. Der an die Schlitzdüse angeschlossene Extruder wird durch 4 symbolisiert.

Der aus der Schlitzdüse extrudierte Hohlstrang 5 tritt in den Formkanal 6 ein. Der Formkanal wird zweckmäßig in einem Abstand von wenigen Millimetern, in der Regel von 5 bis 50, vorzugsweise 10 bis 20 Millimetern, von der Schlitzdüse angeordnet. Der Formkanal ist kühlbar, beispielsweise durch ein in den Bohrungen 7 fließendes Kühlmittel. Der Hohlstrang wird durch einen Gasdruck, der höher ist als der Druck in dem Formkanal, in Berührung mit dem Formkanal gehalten. Der Gasdruck kann durch überatmosphärischen Druck oder vorteilhafter durch einen Unterdruck im Formkanal erzeugt werden. Bei der Ausführungsform mit beweglichen Abschnitten eines im übrigen feststehenden Formkanals sind die Seitenwände durchgehend feststehend angeordnet. Bevorzugt wird ein Vakuumformkanal verwendet, der in den Formwänden und den Seitenwänden evakuierbare Nuten 8 enthält. Die Seitenwände sind in Fig. 1 nicht dargestellt; sie stellen die Verbindung zwischen der oberen und der unteren Formkanalwand dar.

Am Eingang des Formkanals befindet sich auf wenigstens einer, vorzugsweise auf beiden Seiten des Hohlstranges ein bewegbarer Abschnitt 9 bzw. 9′ der Formkanalwandung. Die Bewegungsrichtung verläuft senkrecht zu der in Fig. 1 dargestellten Schnittebene. Zur Bewegung der Wandabschnitte 9 bzw. 9′ kann ein beliebiger, rhythmisch arbeitender Antrieb verwendet werden, beispielsweise eine rhythmisch angesteuerte Hydraulik oder ein Exzentergetriebe. Ein Exzentergetriebe bewirkt eine nach einer Sinusfunktion zu- und abnehmende Bewegungsgeschwindigkeit, was auch zur Ausbildung eines sinusförmigen Wellenverlaufs führt. Bei gleichförmiger Bewegung, beispielsweise mittels eines rhythmisch umschaltbaren Zahnstangengetriebes, wird ein angenähert zickzackförmiger Wellenverlauf erreicht. Die Bewegung der Formkanalwandabschnitte kann gegebenenfalls an den Endpunkten oder an den Zwischenpunkten unterbrochen werden, wodurch sich ein mehr kasten- bzw. stufenförmiger Wellenverlauf ergibt.

Gemäß einer weiteren Ausbildung des Verfahrens werden die auf den extrudierten Strang einwirkenden Reibungskräfte durch eine Relativbewegung des ganzen Formkanals gegenüber der Schlitzdüse erzeugt. In diesem Falle ist der Formkanal in quer zur Extrusionsrichtung rhythmisch wechselnder Richtung bewegbar angeordnet. Diese Ausbildung des Verfahrens hat den Vorteil, daß man mit einem herkömmlichen von beweglichen Teilen freien Formkanal ohne bewegliche Teile auskommt.

Die Relativbewegung zwischen der Schlitzdüse und dem Formkanal kann wahlweise so ausgeführt werden, daß die Schlitzdüse vor dem feststehend angeordneten Formkanal hin- und herbewegt wird, oder daß die Schlitzdüse fest aufgestellt ist und der Formkanal hin- und herbewegt wird. Die letztgenannte Möglichkeit ist bevorzugt. Der verschiebbar angeordnete Teil der Vorrichtung wird vorzugsweise mittels eines Exzenterantriebs auf einem Rollenlager bewegt. In der Regel muß entweder die Schlitzdüse mit dem sie speisenden Extruder oder der Formkanal mit einem gegebenenfalls daran angeschlossenen Abkühlrost und einer Abzugsvorrichtung als geschlossene Baueinheit hin- und herbewegt werden. Wenn der extrudierte Strang nicht breiter als 200 bis 300 mm ist, oder wenn er aus einem dünnwandigen elastischen Kunststoff besteht, kann die Abzugsvorrichtung in ausreichendem Abstand vom hinteren Ende des Formkanals feststehend angeordnet sein und nur der Formkanal hin- und herbewegt werden. Ist der Strang dagegen deutlich breiter, so reicht seine Elastizität bei spröden Werkstoffen und beulsteifer Geometrie nicht aus, um die Relativbewegung ohne Bruch zu überstehen.

Es ist für die Quersteifigkeit der Stegmehrfachplatte von Vorteil, wenn die Wellenamplitude A das 0,5- bis 2-fache des mittleren Stegabstandes B beträgt, in der Praxis meistens 10 bis 30 mm. Da zwischen der Bewegung der Formkanalwandung und der des Hohlstranges stets ein gewisser Schlupf auftritt, können die Formkanalwände bzw. dieser selbst um einen größeren Betrag, beispielsweise das 0,5- bis 4-fache des mittleren Stegabstandes bzw. des mittleren Abstandes der Zwischenräume zwischen den Kernstücken in der Schlitzdüse bewegbar sein.

Wenn die Amplitude der Relativbewegung groß ist, besteht die Gefahr, daß sich die Seitenkanten des Hohlstranges von den Seitenwänden des Formkanals lösen, was zu der meist unerwünschten Ausbildung eines gewellten Randes führen kann. Dieser Gefahr kann man durch ein verstärktes Vakuum im Formkanal oder durch Überbreite der Schlitzdüse begegnen. Wenn nämlich die Schlitzdüse um die halbe bis volle Amplitudenhöhe breiter ist als der Formkanal, können die Ablösungen der Seitenkanten nahezu vollständig unterdrückt werden.

Der abgekühlte Hohlstrang wird mittels einer Abzugsvorrichtung, beispielsweise dem Walzenpaar 10/11, aus dem Formkanal 6 abgezogen. Der gewünschte Kurvenverlauf wird dadurch erreicht, daß man die Abzugsgeschwindigkeit mit dem Rhythmus des Richtungswechsels der Formkanalwandabschnitte in ein zweckmäßiges Verhältnis bringt. Eine Wellenlänge W vom 1- bis 20-fachen des mittleren Stegabstandes B wird erreicht, wenn der rhythmische Wechsel der Richtung der Reibungskräfte jeweils nach dem Abziehen eines Strangstückes, dessen Länge etwa dem 0,5- bis 10-fachen des mittleren Stegabstandes entspricht, vorgenommen wird.

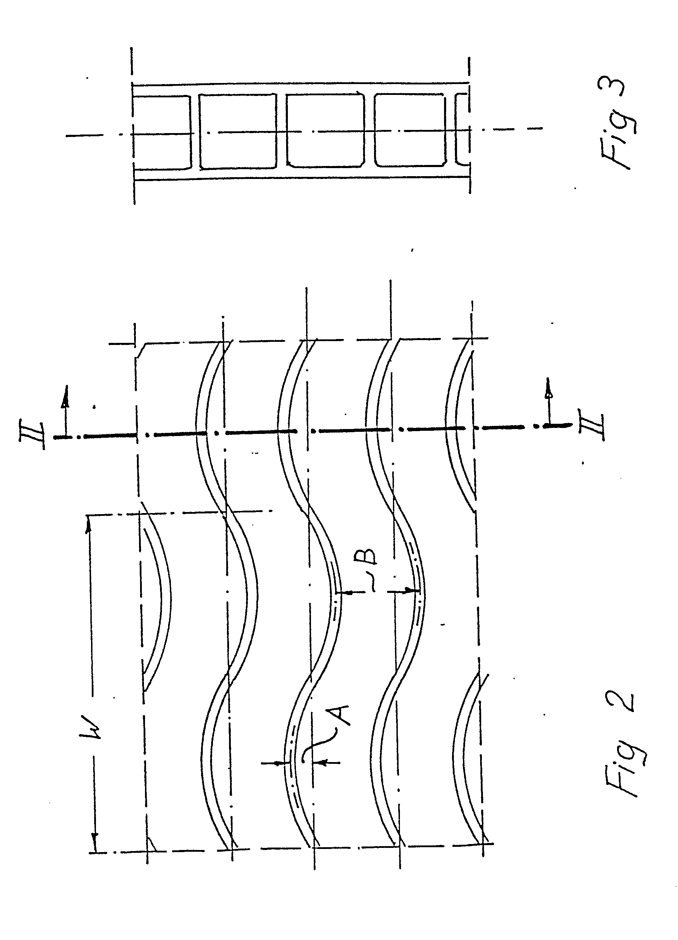

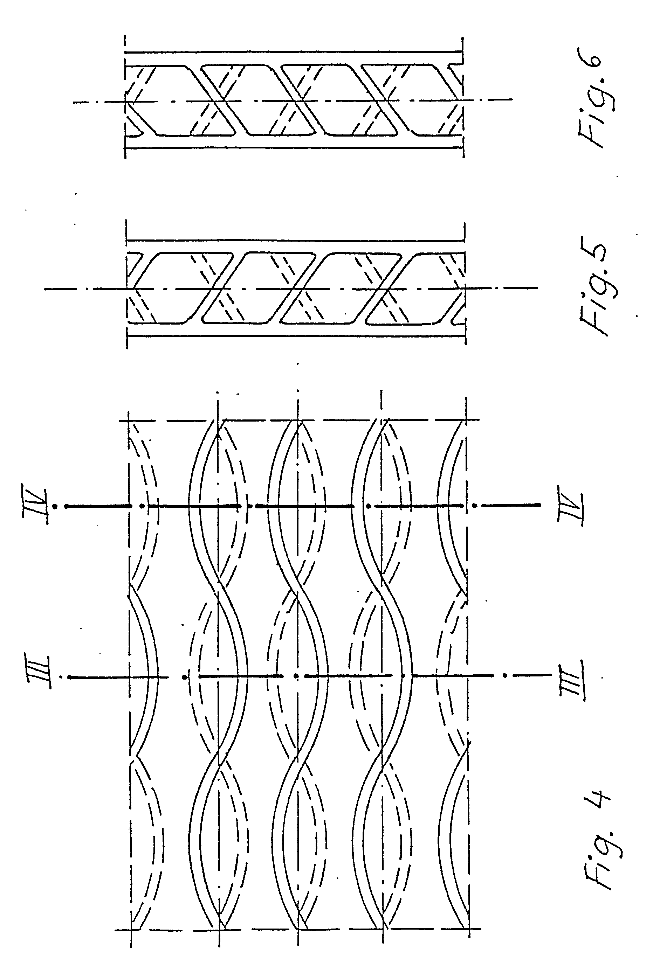

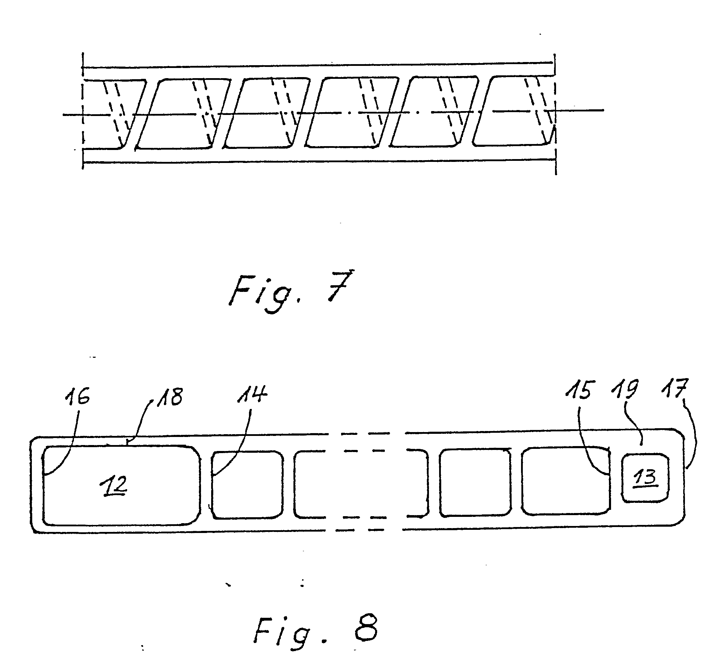

Wenn nur auf eine Seite des Hohlstranges Reibungskräfte einwirken, wird nur die Ansatzlinie der Stege an dieser Seite wellenförmig ausgebildet, während der Steganatz auf der anderen Seite geradlinig bleibt. Man erhält auf diese Weise eine Stegplatte mit dem in Fig. 7 dargestellten Querschnitt. Vorzugsweise wirken auf beiden Seiten des Hohlstranges Reibungskräfte ein. Wenn die Reibungskräfte stets gleichsinnig wirken, entsteht eine Stegplatte mit dem in Fig. 3 dargestellten Querschnitt. Man erreicht dies am einfachsten dadurch, daß man die Abschnitte 9 und 9' mechanisch koppelt und mit dem gleichen Antrieb rhythmisch bewegt oder daß man den Formkanal als ganzen rhythmisch bewegt. Werden die Formkanalwände dagegen mit einem stets gegensinnig arbeitenden Antrieb bewegt, so werden die Ansatzlinien der Stege an der oberen und der unteren Außenwand jeweils entgegengesetzt gewellt, wie in Fig. 4 in der Draufsicht und in den Fig. 5 und 6 im Querschnitt angedeutet ist.

Ausführungsbeispiel

Aus einem Extruder von 60 mm Schneckendurchmesser wird eine Hohlkammerprofildüse 1 mit einer thermoplastischen Polycarbonat-Formmasse gespeist. Die Massetemperatur beträgt 270 °C, die Düsentemperatur 260 °C. Der Strang 5 wird mit einer Geschwindigkeit von 1 m/min ausgetragen. Die Breite des Hohlprofilstranges beträgt 250 mm, die Höhe 16 mm. Der Strang hat 16 Hohlkammern von rechteckigem Querschnitt. Die Wanddicke der Außenwände und der Stege ist nahezu gleich und beträgt ca. 1 mm. Der Massestrang wird 20 mm nach der Düse in einen 500 mm langen Kalibrator 6 eingeführt. In den ersten 100 mm des Kalibrators sind die Kalibrierflächen für die Außenwände des Hohlkammerprofils 9 beweglich angeordnet. Sie werden gleichsinnig durch einen Exzenterbetrieb quer zur Extrusionsrichtung hin und her bewegt.

Die Temperatur des beweglichen Kalibratorabschnittes wird auf 100 °C eingestellt. Die Temperatur des übrigen Kalibrators beträgt 50 °C. Am beweglichen und am feststehenden Teil des Kalibrators ist ein Vakuum von 500 mm WS angelegt. Die Zeit für eine Hin- und Herbewegung der beweglichen Kalibratorflächen beträgt 6 sec. Die Amplitude der Bewegung beträgt 15 mm entsprechend einem Exzenterraddurchmesser von 30 mm.

Die aus dem Kalibrator ausgetragenen Hohlkammerprofilplatten haben sinusförmig gewellte Stege. Die Amplitude A der entstehenden Sinus-Funktion beträgt 8 mm. Die Periodenlänge W beträgt 100 mm. Der Querschnitt der Hohlkammerplatte ist wie Fig. 3 ausgebildet.

Die Außenwände sind, wie in Fig. 8 dargestellt, im Bereich der Randkammern 12, 13 je nach dem Abstand des ersten inneren Steges 14 bzw. 15 vom Randsteg 16 bzw. 17 durch Streckung dünner 19 oder durch Stauchung dicker 19 ausgebildet als im übrigen Plattenbereich.

Bei einer anderen Ausführungsform des Verfahrens ist der Kalibrator beweglich angeordnet und wird quer zur Extrusionsrichtung durch einen Exzenterantrieb hin und her bewegt. Die übrigen Verfahrensbedingungen sind wie oben beschrieben.

Die aus dem Kalibrator ausgetragenen Hohlkammerprofilplatten haben den gleichen sinusförmig gewellten Verlauf der Stege wie bei dem zuvor beschriebenen Verfahren.

**Patentansprüche**

1. Verfahren zur Herstellung von extrudierten Stegmehrfachplatten mit in Extrusionsrichtung gewellten Stegen durch Extrusion einer thermoplastischen Kunststoffes durch eine Schlitzdüse, die zur Ausbildung der Stege Kernstücke im Düsenschlitz enthält, zu einem Hohlstrang und durch anschließende Kalibrierung und Abkühlung des extrudierten Hohlstranges in einem Formkanal und Abziehen des erkalteten Hohlstanges nach dem Austritt aus dem Formkanal, dadurch gekennzeichnet, daß man in dem Formkanal auf wenigstens eine Oberfläche des extrudierten Stranges in einem Bereich, in welchem er sich noch oberhalb seiner Erweichungstemperatur befindet, rhythmisch die Richtung wechselnde Reibungskräfte quer zur Extrusionsrichtung einwirken läßt.

2. Verfahren nach Anspruch 1, dadurch gekennzeichnet, daß die Reibungskräfte durch eine quer zur Extrusionsrichtung verlaufende Bewegung einer Wandung des Formkanals erzeugt werden.

3. Verfahren nach Anspruch 2, dadurch gekennzeichnet, daß die Reibungskräfte durch eine Querbewegung des ganzen Formkanals erzeugt werden.

4. Verfahren nach Anspruch 2, dadurch gekennzeichnet, daß die Reibungskräfte durch eine Querbewegung wenigstens eines Teilstückes der Formkanalwandung, welches an der Eingangsseite des Formkanals liegt, erzeugt werden.

5. Verfahren nach Anspruch 1, dadurch gekennzeichnet, daß man auf beide Oberflächen des extrudierten Stranges Reibungskräfte einwirken läßt.

6. Verfahren nach Anspruch 5, dadurch gekennzeichnet, daß man auf beide Oberflächen im gleichen Rhythmus wechselnde, stets in gleicher Richtung wirkende Reibungskräfte einwirken läßt.

7. Verfahren nach Anspruch 5, dadurch gekennzeichnet, daß man auf beide Oberflächen im gleichen Rhythmus wechselnde, stets in entgegengesetzter Richtung wirkende Reibungskräfte einwirken läßt.

8. Verfahren nach den Ansprüchen 1 bis 7, dadurch gekennzeichnet, daß der rhythmische Wechsel der Richtung der Reibungskräfte jeweils nach Abziehen eines Strangstückes, dessen Länge etwa dem 0,5 bis 10 fachen des mittleren Stegabstandes entspricht, aus dem Formkanal vorgenommen wird.

9. Verfahren nach den Ansprüchen 1 bis 8, dadurch gekennzeichnet, daß in den randständigen Kammern des extrudierten Hohlstranges ein Gasdruck aufrechterhalten wird, der höher ist als der Druck, welcher in dem Formkanal auf die seitliche Begrenzung des Stranges einwirkt.

10. Extrudierte Stegmehrfachplatte aus thermoplastischem Kunststoff bestehend aus zwei parallelen ebenen Außenwänden und dazwischen einstückig angeordneten in Extrusionsrichtung gewellten Stegen, enthaltend Außenwandabschnitte mit im Rhythmus der Stegwellung schwankender Dicke im Bereich zwischen der Seitenkante der Stegmehrfachplatte und dem Ansatz des nächstfolgenden Steges, dadurch gekennzeichnet, daß die Stege im Innern der Stegmehrfachplatte gleichsinnig gewellt sind und daß die zwischen den Stegansätzen liegenden Bereiche der Außenwände ungereckt und von gleichförmiger Dicke sind.

11. Extrudierte Stegmehrfachplatte nach Anspruch 10, dadurch gekennzeichnet, daß die Stegansätze an einer der Außenwände gewellt und an der anderen Außenwand im wesentlichen geradlinig verlaufen.

12. Extrudierte Stegmehrfachplatte nach Anspruch 10, dadurch gekennzeichnet, daß die Stegansätze an den beiden Außenwänden jeweils gleichsinnig gewellt sind.

13. Extrudierte Stegmehrfachplatte nach Anspruch 10, dadurch gekennzeichnet, daß die Stegansätze an den beiden Außenwänden jeweils gegensinnig gewellt sind.

14. Extrudierte Stegmehrfachplatte nach den Ansprüchen 10 bis 13, dadurch gekennzeichnet, daß die Wellenlänge der Stegwellung das 1- bis 20-fache des mittleren Stegabstandes beträgt.

15. Extrudierte Stegmehrfachplatte nach den Ansprüchen 10 bis 14, dadurch gekennzeichnet, daß die Wellenamplitude der Stegwellung das 0,5- bis 2-fache des mittleren Stegabstandes beträgt.

16. Vorrichtung zur Durchführung des Verfahrens gemäß Anspruch 1, bestehend aus einem Extruder, einer daran angeschlossenen Schlitzdüse, die zur Ausbildung der Stege Kernstücke im Düsenschlitz enthält, und einem hinter der Schlitzdüse angeordneten kühlbaren Formkanal, enthaltend zwei parallele ebene Formkanalwände und die Seiten des Formkanals bildende, feststehende Seitenwände, sowie einer hinter dem Formkanal angeordneten Abzugsvorrichtung, dadurch gekennzeichnet, daß der Formkanal als ganzer quer zur Extrusionsrichtung in rhythmisch wechselnder Richtung bewegbar angeordnet ist oder daß ein Abschnitt von wenigstens einer der Formkanalwände im Eingangsbereich des Formkanals quer zur Extrusionsrichtung in rhythmisch wechselnder Richtung bewegbar angeordnet ist und der nachfolgende Abschnitt der Formkanalwand feststehend angeordnet ist.

17. Vorrichtung nach Anspruch 16, dadurch gekennzeichnet, daß gleichgroße Abschnitte beider Formkanalwände bewegbar angeordnet sind.

18. Vorrichtung nach Anspruch 17, dadurch gekennzeichnet, daß die Abschnitte gleichsinnig bewegbar angeordnet sind.

19. Vorrichtung nach Anspruch 17, dadurch gekennzeichnet, daß die Abschnitte gegensinnig bewegbar angeordnet sind.

20. Vorrichtung nach den Ansprüchen 16 bis 19, dadurch gekennzeichnet, daß der Formkanal in den Formwänden und den Seitenwänden mit evakuierbaren Nuten versehen ist.

21. Vorrichtung nach den Ansprüchen 16 bis 20, dadurch gekennzeichnet, daß die bewegbaren Abschnitte der Formkanalwände um einen Betrag vom 0,5- bis 4-fachen des mittleren Abstandes der Zwischenräume zwischen den Kernstücken in der Schlitzdüse bewegbar sind.

## Claims

1. Process for preparing extruded webbed composite sheets having webs corrugated in the direction of extrusion, by extrusion of a thermoplastic plastics material through a slotted die which contains core pieces in the die slot in order to form the web, into a hollow strip and by subsequent calibration and cooling of the extruded hollow strip in a moulding channel and removal of the cooled hollow strip after it has left the moulding channel, characterised in that in the moulding channel frictional forces are brought to bear on at least one surface of the extruded strip at right angles to the direction of extrusion, in an area where the strip is still above its softening temperature, said forces rhythmically changing direction.

2. Process as claimed in claim 1, characterised in that the frictional forces are generated by a movement, at right angles to the direction of extrusion, of a wall of the moulding channel.

3. Process as claimed in claim 2, characterised in that the frictional forces are generated by transverse movement of the entire moulding channel.

4. Process as claimed in claim 2, characterised in that the frictional forces are generated by a transverse movement of at least part of the wall of the moulding channel which is at the entry end of the moulding channel.

5. Process as claimed in claim 1, characterised in that frictional forces are brought to bear on both surfaces of the extruded strip.

6. Process as claimed in claim 5, characterised in that frictional forces are brought to bear on both surfaces, alternating in the same rhythm and always acting in the same direction.

7. Process as claimed in claim 5, characterised in that frictional forces are brought to bear on both surfaces, alternating in the same rhythm, and always operating in opposite directions.

8. Process as claimed in claims 1 to 7. characterised in that the rhythmic change in the direction of the frictional forces is always carried out after the removal of an extruded strip the length of which is about 0.5 to 10 times the average spacing of the webs, from the moulding channel.

9. Process as claimed in claims 1 to 8, characterised in that, in the chambers at the edge of the extruded hollow strip, a gas pressure is maintained which is higher than the pressure which acts on the lateral boundaries of the strip in the moulding channel.

10. Extruded webbed composite sheet of thermoplastic plastics material consisting of two parallel planar outer walls and webs arranged integrally between them, corrugated in the direction of extrusion, containing outer wall portions the thickness of which fluctuates with the rhythm of the corrugations of the webs in the region between the side edge of the webbed composite sheet and the start of the next web, characterised in that the webs are corrugated in the same direction inside the composite webbed sheet and in that the areas of the outer walls located between the starts of the webs are unstretched and are of uniform thickness.

11. Extruded webbed composite sheet as claimed in claim 10, characterised in that the starts of the webs are corrugated on one of the outer walls and extend substantially in a straight line at the other outer wall.

12. Extruded webbed composite sheet as claimed in claim 10, characterised in that the starts of the webs are corrugated in the same direction on both outer walls.

13. Extruded webbed composite sheet as claimed in claim 10, characterised in that the starts of the webs are corrugated in opposite directions on the two outer walls.

14. Extruded webbed composite sheet as claimed in claims 10 to 13, characterised in that the length of the corrugations of the webs is 1 to 20 times the average spacing of the webs.

15. Extruded webbed composite sheet as claimed in claims 10 to 14, characterised in that the amplitude of the corrugations of the web is 0.5 to 2 times the average spacing of the webs.

16. Apparatus for carrying out the process as claimed in claim 1, consisting of an extruder, a slotted die connected thereto which contains core pieces in the die slot in order to form the webs, and a coolable moulding channel arranged behind the slotted die, containing two parallel planar moulding channel walls and fixed side walls which form the sides of the moulding channel, and a removal device mounted behind the moulding channel, characterised in that the moulding channel as a whole is arranged so as to be moveable in rhythmically alternating directions at right angles to the direction of extrusion or in that a section of at least one of the walls of the moulding channel is arranged to be moveable, in rhythmically alternating directions, in the entry area of the moulding channel at right angles to the direction of extrusion, and the next section of the wall of the moulding channel is fixed.

17. Apparatus as claimed in claim 16, characterised in that equal-sized sections of both walls of the moulding channel are mounted so as to be moveable.

18. Apparatus as claimed in claim 17, characterised in that the sections are arranged to be moveable in the same direction.

19. Apparatus as claimed in claim 17, characterised in that the sections are arranged to be moveable in opposite directions.

20. Apparatus as claimed in claims 16 to 19, characterised in that the moulding channel is provided with evacuable grooves in the moulding walls and side walls.

21. Apparatus as claimed in claims 16 to 20, characterised in that the moveable sections of the walls of the moulding channel are moveable by an amount of 0.5 to 4 times the average spacing of the intervals between the core pieces in the slotted die.

## Revendications

1. Procédé pour la fabrication de plaques à parois multiples et nervures d'entretoisement extrudées, avec des nervures ondulées dans le sens de l'extrusion, par extrusion d'une matière thermoplastique à travers une filière à fente, qui contient des noyaux dans la fente de filière pour la formation des nervures, en un profilé creux, et par calibrage et refroidissement subséquents du profilé creux extrudé dans un canal de formage, et extraction du profilé creux refroidi après la sortie du canal de formage, caractérisé en ce que dans le canal de formage, on laisse agir des forces de frottement en sens alterné de manière rythmée perpendiculairement au sens de l'extrusion, sur au moins une face du boudin extrudé, dans une zone où il se trouve encore au-dessus de sa température de ramollissement.

2. Procédé selon la revendication 1, caractérisé en ce que les forces de frottement sont obtenues par un mouvement d'une paroi du canal de formage, effectué perpendiculairement au sens de l'extrusion.

3. Procédé selon la revendication 2, caractérisé en ce que les forces de frottement sont obtenues par un mouvement transversal de tout le canal de formage.

4. Procédé selon la revendication 2, caractérisé en ce que les forces de frottement sont obtenues par un mouvement transversal d'au moins une partie de la paroi du canal de formage, située du côté de l'entrée.

5. Procédé selon la revendication 1, caractérisé en ce qu'on laisse agir des forces de frottement sur les deux faces du boudin extrudé.

6. Procédé selon la revendication 5, caractérisé en ce qu'on laisse agir des forces de frottement alternées suivant le même rythme, agissant sur les deux faces du boudin extrudé à chaque fois dans le même sens.

7. Procédé selon la revendication 5, caractérisé en ce qu'on laisse agir des forces de frottement alternées suivant le même rythme, agissant sur les deux faces du boudin extrudé à chaque fois dans le sens inverse.

8. Procédé selon les revendications 1 à 7, caractérisé en ce que le changement rythme de sens des forces de frottement s'effectue chaque fois après l'extraction du canal de formage d'un tronçon de boudin dont la longueur correspond à environ 0,5 à 10 fois la distance moyenne entre les nervures.

9. Procédé selon les revendications 1 à 8, caractérisé en ce que dans les alvéoles de bordure du profilé creux extrudé, on maintient une pression gazeuse qui est supérieure à la pression agissant, dans le canal de formage, sur la bordure latérale du boudin.

10. Plaque à parois multiples et nervures d'entretoisement extrudée, en matière thermoplastique, constituée de deux parois extérieures disposées dans des plans parallèles, et de nervures formées intégralement entre ces parois, ondulées dans le sens de l'extrusion, contenant des segments de paroi extérieure dont l'épaisseur oscille suivant le rythme de l'ondulation des nervures, dans la zone comprise entre l'arête latérale de la plaque à parois multiples et nervures et l'appui de la nervure suivante, caractérisée en ce que les nervures sont ondulées dans le même sens à l'intérieur de la plaque à parois multiples, et que les zones des parois extérieures, situées entre les appuis des nervures, ne sont pas étirées et sont d'épaisseur uniforme.

11. Plaque à parois multiples et nervures extrudée selon la revendication 10, caractérisée en ce que les appuis des nervures sur une des parois extérieures sont ondulés et s'étendent essentiellement en ligne droite sur l'autre paroi extérieure.

12. Plaque à parois multiples et nervures extrudée selon la revendication 10, caractérisée en ce que les appuis des nervures sont ondulés en phase sur les deux parois extérieures.

13. Plaque à parois multiples et nervures extrudée selon la revendication 10, caractérisée en ce que les appuis des nervures sont ondulés en opposition de phase sur les deux parois extérieures.

14. Plaque à parois multiples et nervures extrudée selon les revendications 10 à 13, caractériséé en ce que la longueur d'onde des ondulations des nervures est de 1 à 20 fois la distance moyenne des nervures.

15. Plaque à parois multiples et nervures extrudée selon les revendications 10 à 14, caractérisée en ce que l'amplitude d'onde des ondulations des nervures est de 0,5 à 2 fois la distance moyenne des nervures.

16. Dispositif pour la mise en œuvre du procédé selon la revendication 1, constitué d'une extrudeuse, d'une filière à fente raccordée à celle-ci, contenant des noyaux dans la fente de filière pour former les nervures, et d'un canal de formage pouvant être refroidi, disposé derrière la filière à fente, contenant deux parois de canal de formage planes parallèles, et des parois latérales fixes constituant les côtés du canal de formage, ainsi que d'un dispositif d'extraction situé après le canal de formage, caractérisé en ce que le canal de formage est disposé de façon mobile dans sa totalité dans un sens alternant de manière rythmée, perpendiculairement au sens d'extrusion, ou bien un tronçon d'au moins une des parois du canal, situé dans la zone d'entrée du canal de formage, est mobile dans un sens alternant de manière rythmée perpendiculairement au sens d'extrusion, et le tronçon subséquent de la paroi du canal est fixe.

17. Dispositif selon la revendication 16, caractérisé en ce que des tronçons de dimensions identiques des deux parois de canal de formage sont mobiles.

18. Dispositif selon la revendication 17, caractérisé en ce que les tronçons sont mobiles en phase.

19. Dispositif selon la revendication 17, caractérisé en ce que les tronçons sont mobiles en opposition de phase.

20. Dispositif selon les revendications 16 à 19, caractérisé en ce que le canal de formage est muni, dans les parois de formage et dans les parois latérales, de gorges dans lesquelles ont peut faire le vide.

21. Dispositif selon les revendications 16 à 19, caractérisé en ce que les tronçons mobiles des parois du canal de formage sont mobiles d'une distance qui est de 0,5 à 4 fois la distance moyenne des interstices entre les noyaux de la filière à fente.

Fig 1

EP 0 158 951 B1

Fig 2

Fig 3

EP 0 158 951 B1

Fig. 4

Fig. 5

Fig. 6

EP 0 158 951 B1

Fig. 7

Fig. 8